# EUROPEAN PATENT APPLICATION

(11) **EP 4 832 190 A1**
(43) Date of publication of application: **28.10.2026**
(21) Application number: 25172355.7
(22) Date of filing: 24.04.2025
(51) Int. Cl.: H01M 50/204, H01M 50/242, B60L 50/64

(54) **BATTERY PACK**

(71) Applicant: SAMSUNG SDI CO., LTD., Yongin-si, Gyeonggi-do 17084 (KR)
(72) Inventor: Killmann, Jörg, 8010 Graz (AT); Reininger, Peter, 8075 Hart bei Graz (AT); Gutierrez Duarte, Juan Manuel, 8010 Graz (AT); Ferk, Bostjan, 2214 Sladki Vrh (SI)
(74) Representative: Gulde & Partner

(57) **Abstract**

The present disclosure refers to a battery pack (100) having a battery pack housing (10) having a plurality of accommodation spaces (12) with a plurality of battery cell stacks (20) disposed in the respective accommodation spaces (12). The battery pack (100) includes a separation wall (30) separating adjacent battery cell stacks (20) from each other; a pressure wall (40) including a first side (44) in contact with end portions (24) of the battery cell stacks (20) being connected or integrally formed with the separation wall (30); a reinforcement structure (50) for reinforcing the separation wall (30) provided on a second side (46) of the pressure wall (40) opposite to the first side (44), the reinforcement structure (50) including: an outer wall (60) spaced from the pressure wall (40) and extending parallel to the pressure wall (40), and a plurality of stiffening ribs (70) between the pressure wall (40) and the outer wall (60), the stiffening ribs (70) contacting the outer wall (60) and/or the pressure wall (40) and extending from a bottom portion (14) in height direction (H), wherein the stiffening ribs (70) have a first contact height (Hc1) in contact with the pressure wall (40) and a second contact height (Hc2) in contact with the outer wall (60) which is less than a total pressure wall height (Hp) of an upper edge (42) of the pressure wall (40).

## Description

### Field of the Disclosure

Embodiments of the present disclosure relates to a battery pack with a reinforcement structure. A further aspect relates to a battery system including the battery pack.

### Technological Background

A battery pack is a set of any number of (for example identical) battery modules and/or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon or by directly coupling the battery cell stacks therein. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

As the location for the active and passive components of a battery system, the battery housing plays a decisive role in the functionality, safety and service life of the energy storage system. It protects the sensitive components from harmful environmental influences such as water, moisture and dust and is therefore crucial for long-term safe and reliable operation. As traction batteries are typically located outside the vehicle cabin, usually in the floor area, the housing is directly exposed to extreme environmental conditions such as temperature, humidity, splash water, salt spray, dust and stone chipping. High mechanical stability and corrosion resistance are therefore essential, even under aggressive external conditions. In addition to the environmental influences, which mainly affect the surface of the housing or the tightness of the housing, the internal and external fastening systems are of particular importance under vehicle operating conditions.

The battery cells of a battery cell stack may be subject to expansion due to various reasons including swelling, aging and/or charging. In such event, due to expansion, the battery cell stack being engaged in the battery pack housing may exert a forces, for example in a longitudinal direction, on the battery pack housing. For example, when considering battery pack housings according to cell-to-pack type, these forces are directly transferred onto the battery pack housing.

Such forces may cause high stresses at critical areas or locations of the battery pack housing. For example, separation walls between the battery cell stacks are critical components regarding mechanical stability. Reinforcement structures including rib structures have been used to increase the mechanical robustness of the battery pack housing.

However, the reinforcement topologies may not sufficiently mitigate local high stresses occurring in the separation walls. As such, there is a requirement for improved concepts for reinforcement structures which can better resist higher forces and/or prevent cracks while improving mechanical robustness of the battery pack housing with respect to battery cell stack expansions.

### Summary of Invention

The invention is defined by the appended claims. The description that follows is subjected to this limitation. Any disclosure lying outside the scope of the claims is only intended for illustrative as well as comparative purposes.

According to one embodiment of the present disclosure, a battery pack is provided. The battery pack includes a battery pack housing with a plurality of accommodation spaces. A plurality of battery cell stacks is disposed in respective accommodation spaces. The battery pack includes a separation wall provided to separate adjacent battery cell stacks from each other. A pressure wall including a first side in contact with end portions of the battery cell stacks is connected or integrally formed with the separation wall. The battery pack further includes a reinforcement structure for reinforcing the separation wall which is provided on a second side of the pressure wall opposite to the first side. The reinforcement structure includes an outer wall spaced apart from the pressure wall and extending parallel to the pressure wall. The reinforcement structure includes a plurality of stiffening ribs between the pressure wall and the outer wall, the stiffening ribs contacting the outer wall and the pressure wall from a bottom portion in height direction. The stiffening ribs have a first contact height in contact with the pressure wall and a second contact height in contact with the outer wall which is less than a total pressure wall height of an upper edge of the pressure wall.

According to an aspect of the disclosure, a battery system is provided including a battery pack according to any of the above embodiments.

According to an aspect of the disclosure, a vehicle is provided includes a battery pack according to any of the above embodiments.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a perspective view of a battery pack according to an embodiment.
- FIG. 2A: illustrates a partial perspective view of a battery pack with stress distribution according to a comparative embodiment.
- FIG. 2B: illustrates a partial cross-sectional view of a separation wall of FIG. 2A.
- FIG. 3A: illustrates a partial perspective view of a battery pack according to an embodiment of the disclosure.
- FIG. 3B: illustrates a top view of a battery pack according to an embodiment of the disclosure.
- FIG. 3C: illustrates a cross-sectional view of the battery pack according to line A-A as indicated in FIG. 3B when viewed from an angle.
- FIG. 3D: illustrates stress distribution from the same view as shown in FIG. 3C.
- FIG. 4A: illustrates a partial perspective view of a battery pack according to another embodiment of the disclosure.
- FIG. 4B: illustrates a side view of Fig. 4A of a battery pack according to the embodiment of the disclosure.
- FIG. 4C: illustrates a perspective view of a battery pack with stress distribution according to the embodiment of the disclosure.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The term "consisting essentially of" means that specific further components can be present, namely those not materially affecting the essential characteristics of a composition.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one embodiment of the present disclosure, a battery pack is provided. The battery pack includes a battery pack housing with a plurality of accommodation spaces. A plurality of battery cell stacks is disposed in respective accommodation spaces. The battery pack includes a separation wall provided to separate adjacent battery cell stacks from each other. A pressure wall including a first side in contact with end portions of the battery cell stacks is connected or integrally formed with the separation wall. The battery pack further includes a reinforcement structure for reinforcing the separation wall which is provided on a second side of the pressure wall opposite to the first side. The reinforcement structure includes an outer wall spaced apart from the pressure wall and extending parallel to the pressure wall. The reinforcement structure includes a plurality of stiffening ribs between the pressure wall and the outer wall, the stiffening ribs contacting the outer wall and the pressure wall from a bottom portion of the battery pack housing in height direction. The stiffening ribs have a first contact height in contact with the pressure wall and/or a second contact height in contact with the outer wall which is less than a total pressure wall height of an upper edge of the pressure wall.

The stiffening ribs are arranged between the pressure wall and the outer wall. The stiffening ribs may be an integral component of the housing. A stiffening rib may be in other words a reinforcement rib or stiffener rib. The stiffening ribs may include flat sheet members, e.g., metal sheet members, but the disclosure is not restricted thereto. The stiffening ribs may transfer force from the pressure wall to the outer wall.

Thus, an expectation to reinforce the structure may be to extend the stiffening ribs to the upper edge of the pressure wall such that the pressure wall can be optimally supported by the outer wall in order to reduce stress at the upper edge of the separation wall. However, it is found that in such comparative embdodiments the tensile stress in the upper edge of the separation wall remain critical. In addition, the dimensions of the separation wall and the rounded transition between the separation wall and the pressure wall are limited due to packaging reasons.

According to the disclosure, as explained below, a non-intuitive and surprising solution is found and quantified by FEM analysis where due to the first contact height and/or the second contact height being less than a total pressure wall height of an upper edge of the pressure wall, the imposed stresses in the upper edge of the separation walls can be significantly reduced. For example, due to removal of stiffening ribs in the upper portions of the pressure wall, the upper portions of the pressure wall become more elastic/flexible thereby reducing an amount of stress imposed in the critical upper edge. This finding is supported by FEM analysis and stress tensor determination for the underlying topology. Therefore, higher forces can be resisted and/or crack formation prevented. Resisting higher forces may further allow larger cell format or less cell spacer thickness and thus increase energy density.

According to an embodiment, a first contact height and/or a second contact height is less than 90% of the total pressure wall height, less than 80% of the total pressure wall height or less than 70% of the total pressure wall height. This ensures that the effect of reducing the tensile stress in the upper edges of the separation wall is high enough to reduce the risk reaching critical (tensile) stress.

According to an embodiment, the stiffening ribs have the first contact height in contact with the pressure wall at a contact region corresponding to where the pressure wall contacts the separation wall. Thus, in this embodiment, the first contact height is directly located at where forces are induced into the separation wall. The height reduction of the stiffening rib at the contact region has an improved effect of reducing stress. In particular, the maximum tension may be split into two force paths flowing into the separation wall at the contact region resulting in reduction of tensile stress in the upper section of separation wall. The contact region (e.g. contact area), in other words, refers to the region (e.g. area) at which the pressure wall and the separation wall meet (e.g. where they contact). The contact region may have a vertically extending line-shaped area corresponding to the contacting side wall of the separation wall.

According to an embodiment, the stiffening ribs have a cut-out that is extending to the first contact height in a direction opposite to the height direction, i.e. in a bottom direction. The cut-out may provide the reduced first contact height. The cut-out may be a region in which no material of the stiffening ribs contacts with the pressure wall. The cut-out may correspond to the contact region. The cut-out of the stiffening ribs can reduce the tensile stress at the top edge of the separation wall to a tolerable level. In particular, due to the cut-out, a maximum tension may split into two main force paths resulting in local stress reduction in the upper section of separation wall. This may be intuitively understood since due to the cut-out extending downwards, the cut-out provides a higher flexibility in the upper portion. Due to the battery cell stack being slightly bulged outwards, the pressure wall may flex outwards due to the missing of the stiffening rib. This may result in a second main force flow distanced below an upper first main force flow along the edge of the separation wall. Thus, by enabling the second main force flow, tensile stress at the upper edge of the separation wall is reduced.

According to an embodiment, wherein the cut-out is formed so that a force exerted by the battery cell stacks onto the pressure wall is split into two height-separated main forces induced into the separation wall. This may lead to an area with reduced stress between the split force paths resulting in effective reduction of stress in the upper edge of the separation wall.

According to an embodiment, the cut-out is formed by removing a portion of the stiffening ribs. For example, the cut-out may be formed by a removal process of stiffening rib material. This can be easily retrofitted for battery packs which have stiffening ribs up to the upper edge of the pressure wall or may be easily integrated in conventional manufacturing production after e.g. casting.

According to an embodiment, the stiffening ribs include at least one stiffening protrusion extending in height direction in contact with the pressure wall toward the upper edge with respect to a bottom, i.e. the lowest point, of the cut-out, wherein the at least one stiffening protrusion is located laterally displaced from a contact region corresponding to where the pressure wall contacts the separation wall. The stiffening protrusion, i.e. a stiffening finger, may ensure a high enough force flow in the upper edge of the separation wall to counteract outward bending of the upper portion of the pressure wall.

According to an embodiment, the stiffening ribs form two uncovered portions on the second side of the pressure wall which are separated from each other by a contact portion of the stiffening ribs contacting the pressure wall at the contact region corresponding to where the pressure wall contacts the separation wall. This configuration may further stabilize the structure of the separation wall.

According to an embodiment, the outer wall has a total outer wall height that is less than the total pressure wall height of the upper edge of the pressure wall. According to an embodiment, the total outer wall height of the outer wall corresponds to the second contact height. As such, since the outer wall is reduced and the height of the stiffening ribs being reduced in a direction away from the separation wall, it is found that a reduction of the stress imposed in the upper portion of the separation wall is achieved.

According to an embodiment, a local height of the stiffening ribs continuously reduces from the first contact height toward the second contact height of the first outer wall. Thus, larger forces can be inserted in the stiffening ribs.

According to an embodiment, a descending slope of the stiffening ribs is smaller in a first region of the pressure wall and steeper in a second region of the outer wall. This optimizes force input in the stiffening ribs and reduces the occurrence of high stresses.

According to an embodiment, the stiffening ribs include a first branched rib portion and a second branched rib portion connected with the pressure wall at the location corresponding to where the pressure wall contacts the separation wall and extend toward the outer wall from this location by being branched with a tilted angle with respect to an extension direction of the separation wall. Thus, two force flows may be provided to split to each of the branched rib portions. This optimizes force input in the stiffening ribs and reduces load on the separation wall.

According to an embodiment, the battery pack housing is casted. For example, the battery pack housing may be high pressure die casted. Die casting refers to a metal casting process by forcing molten metal under high pressure into a mold cavity. For example, the battery pack housing may include aluminum. The casted battery pack housing may provide excellent surface properties.

According to an embodiment, the plurality of stiffening ribs is integrally formed with the pressure wall and the outer wall. Thus, additional stresses at material transitions may be avoided.

According to an aspect of the disclosure, a battery system is provided including a battery pack according to any of the above embodiments. The same advantages as in the above may be reached.

According to an aspect of the disclosure, a vehicle is provided includes a battery pack according to any of the above embodiments. The same advantages as in the above may be reached.

### Specific Embodiments

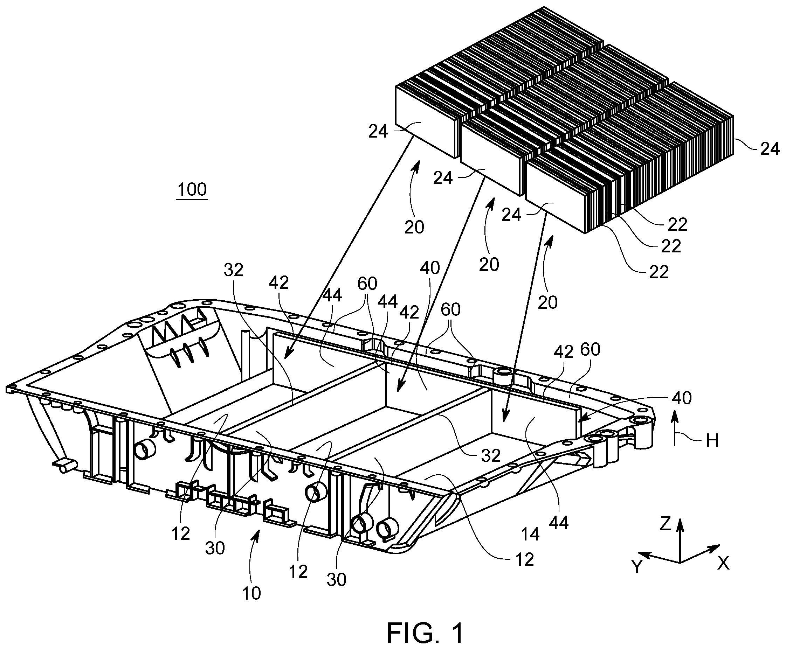

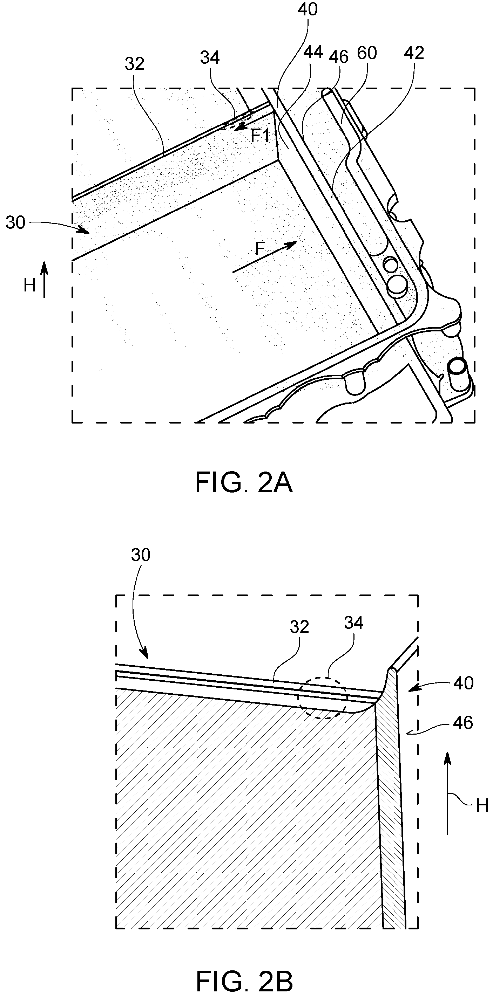

FIG. 1 is a perspective view of a battery pack 100 including a battery pack housing 10 and a battery cell stack 20 according to an embodiment. FIG. 2A shows a partial perspective view of a comparative battery pack with stress distribution according. FIG. 2B illustrates a partial cross-sectional view of a separation wall 30 of FIG. 2A.

Referring to FIG. 1, the battery pack housing 10 has a plurality of accommodation spaces 12. In this example embodiment, three accommodation spaces 12 are provided but the disclosure is not restricted thereto.

As illustrated in FIG. 1, a plurality of battery cell stacks 20 are provided. The battery cell stacks 20 are disposed in respective accommodation spaces 12 (here only indicated by lines and for convenience, the battery cell stack 20 is omitted in FIG. 2A). The battery cell stacks 20 are coupled to the battery pack housing 10, for example, mechanically and/or by adhesive force. The battery cell stack 20 may be directly coupled to the battery pack housing 10. In this embodiment, a module frame may be omitted but the disclosure is not restricted thereto. Each battery cell stack 20 further includes a plurality of battery cells 22..

The battery pack housing 10 further includes a separation wall 30. The separation wall 30 separates adjacent battery cell stacks 20 from each other. In this embodiment, two separation walls 30 are provided separating the three battery cell stacks 20 from each other. In other embodiments, a single or more than two separation walls 30 may be provided.

The battery pack housing 10 further includes a pressure wall 40. The pressure wall 40 includes a first side 44 which is in contact with end portions 24 of the battery cell stack 20 when the battery cell stack 20 is disposed in accommodation space 12. For example, two pressure walls 40 may be provided on both opposite end portions 24 of the battery cell stack 20. Thus, for example, both end portions 24 of the battery cell stack 20 may be in contact with a respective pressure walls 40. The pressure wall 40 is connected or integrally formed with the separation wall 30. The battery cell stack 20 may exert a force F onto the pressure wall 40. The force F may be due to, for example, swelling, aging or during charging. These force F acting on the pressure wall 40 needs to be resisted by the battery pack housing 10 and the separation wall 30 as explained below.

Further, as shown in FIG. 1, the battery pack housing 10 further includes an outer wall 60. The outer wall 60 is spaced apart from the pressure wall 40 on its second side 46, for example by a predetermined distance, on the second side 46 of the pressure wall 40. The outer wall 60 may extend in a direction parallel, or substantially parallel, to the pressure wall 40. Therefore, a distance between the pressure wall 40 and the outer wall 60 may be constant along and with respect to the pressure wall 40.

The battery pack housing 10 may be casted, for example, high pressure casted. For example, the pressure wall 40 and the outer wall 60 may be integrally formed in the casting. As such, an integrated battery pack housing 10 may be obtained reducing material like fastening members for manufacturing and reducing imposed stresses at mechanical connections.

Referring now to FIG. 2A, a comparative example shows a perspective view of a battery pack housing with calculated stress distribution (e.g., tensile stress) according to the comparative embodiment for identification of induced local tensile stresses. FIG. 2B illustrates a perspective view of a separation wall 30 according to the same comparative embodiment. The distribution of tensile stresses imposed in the components of the battery pack housing 10 shown in FIG. 2A may be obtained by simulation using finite element method, FEM.

The FIG. 2A illustrates the stress response as a distribution of stresses of the separation wall 30 and the pressure wall 40 responding to a force F exerted by the battery cell stack 20 on the pressure wall 40. Such force F may be due to swelling of battery cells, charging of battery cells or aging but the disclosure is not restricted thereto. The comparative example may include stiffening ribs (not shown in FIGS. 2A and 2B) between pressure wall 40 and outer wall 60 which extend from a bottom portion 14 up to the total pressure wall height Hp in an expectation to reduce tensile stresses acting on the separation wall 30.

However, as illustrated in FIG. 2A high stresses, for example tensile stresses, are imposed in the separation wall 30 between the battery cell stacks 20. For example, the tensile stresses increase in height direction H located close to the contact region 48 between separation wall 30 and pressure wall 40 on the upper edge 32 of the separation wall 30.

Referring in detail now to FIG. 2A, it is identified by FEM analysis that even if stiffening ribs are extended up to the upper edge 42 of the pressure wall 40, a local maximum of tensile stress occurs at the upper edge 32 of the separation wall 30. A main force F1 in FIG. 2B illustrates the force entry to the separation wall 30. This main force F1 causes a critical area 34 having maximum tensile stress, which is illustrated in FIG. 2A, where the stress tensor exhibits a maximum. The critical area 34 is as well illustrated in FIG. 2B by the indicated circle. Thus, it is found that the force F exerted by the battery cell stack 20 may lead to critical stress in the upper edge 32 of the separation wall 30. This may result in lower stress resistance and/or crack formation in the separation wall 30.

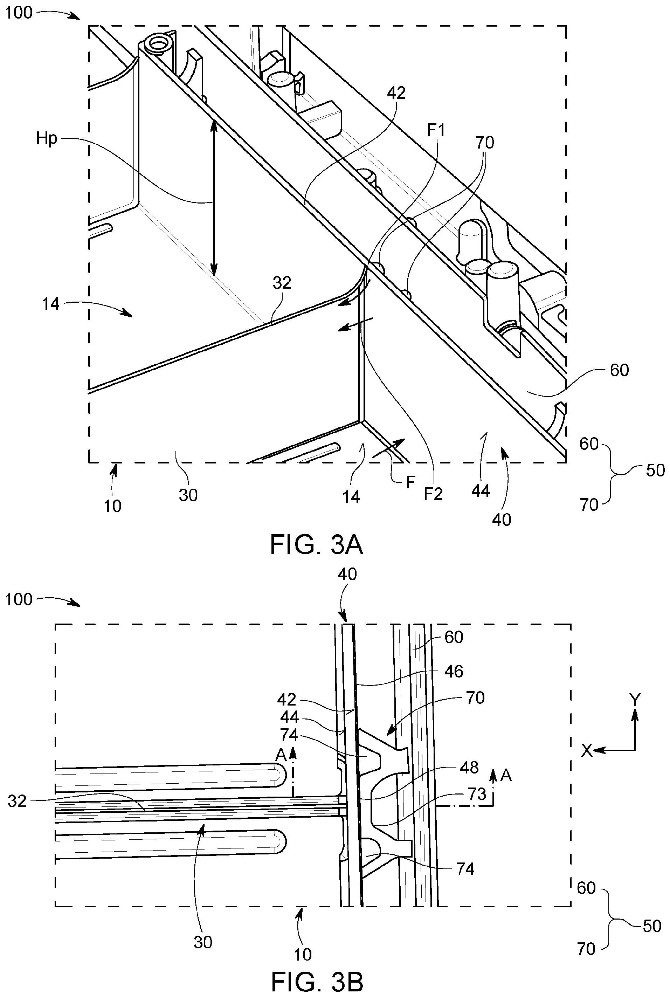

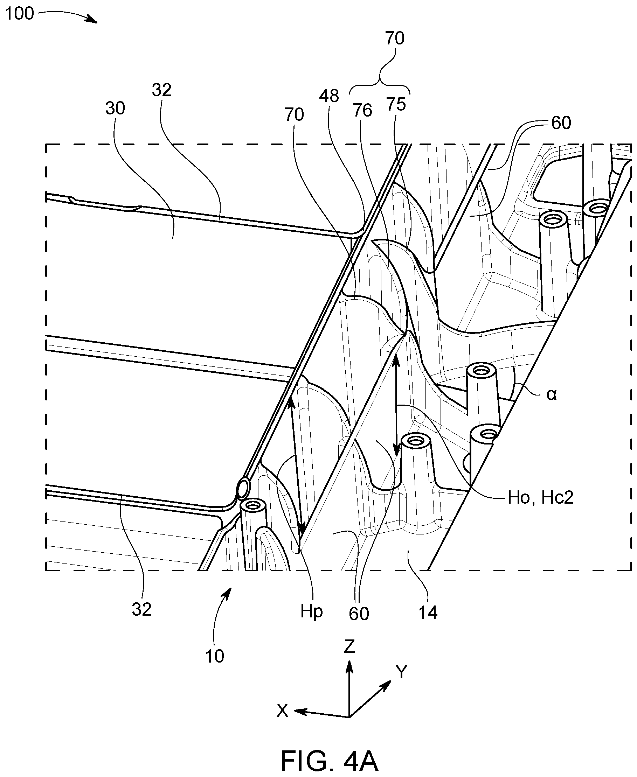

As will be shown in the following, various embodiments of the battery pack 100 as described with respect to FIGS. 3A - D and FIGS. 4A - D reduce the tensile stress in the upper edge 32, e.g. the critical area 34, of the separation wall 30 and thus improve stress resistance of the battery pack 100 and/or to prevent crack formation. A simulation methodology, topology optimization may be used as tool resulting in the described structural topologies for reducing stresses at a critical position, thus enabling the battery pack housing 10 to resist higher forces.

FIG. 3A illustrates a partial perspective view of a battery pack 100 according to an embodiment. FIG. 3B illustrates a top view of a battery pack 100 according to the embodiment.

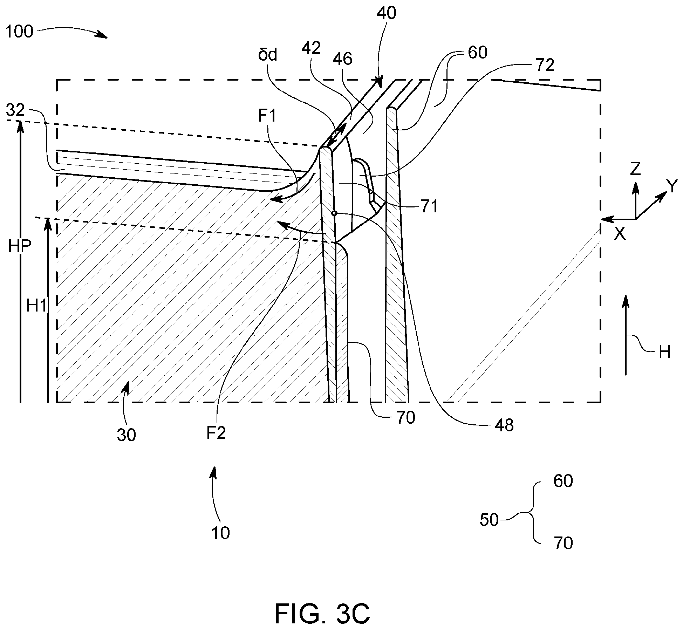

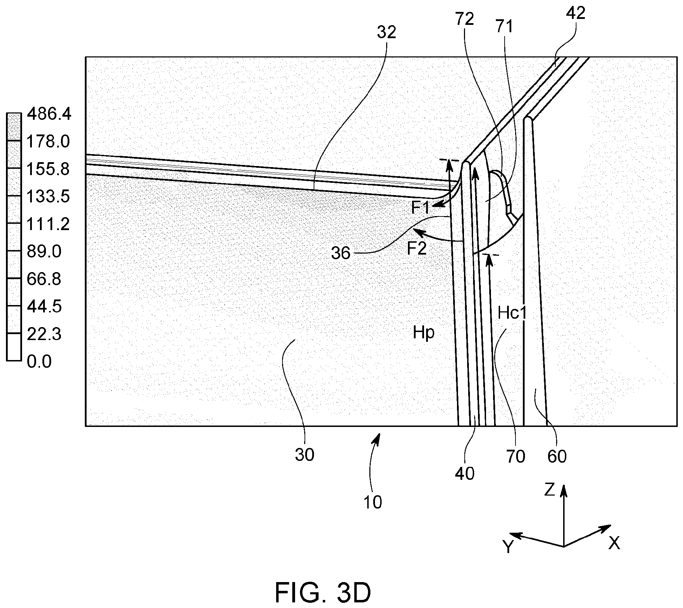

FIG. 3C illustrates a cross-sectional view of the battery pack 100 according to line A-A as indicated in FIG. 3B when viewed from an angle. FIG. 3D illustrates stress distribution from the same view as shown in FIG. 3C.

The battery pack 100 includes a reinforcement structure 50. The reinforcement structure 50 is to reinforce the separation wall 30 against induced forces as described above. For example, the reinforcement structure 50 reduces the tensile stress in the upper edge 32, i.e. at the critical area 34 (see FIG. 2B), of the separation wall 30.

The reinforcement structure 50 is provided on the second side 46 of the pressure wall 40 opposite to the first side 44. The reinforcement structure 50 includes the outer wall 60 which is spaced apart from the pressure wall 40 and extends parallel to the pressure wall 40.

In addition, the reinforcement structure 50 includes a plurality of stiffening ribs 70 between the pressure wall 40 and the outer wall 60. The stiffening ribs 70 may be integrally formed with the pressure wall 40 and/or outer wall 60 as part of the casting process.

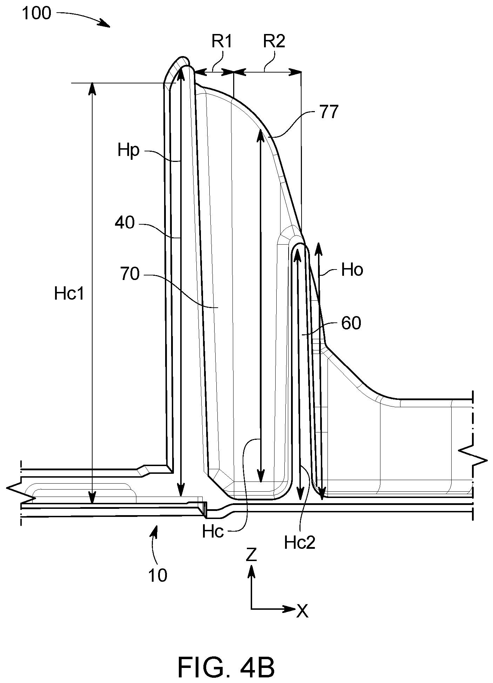

The stiffening ribs 70 contact the outer wall 60 and the pressure wall 40. For example, as shown in the top view of FIG. 4B, the stiffening ribs 70 extend according to a topology to the outer wall 60.

With respect to the pressure wall 40, the stiffening ribs 70 extend from a bottom portion 14 (see in FIG. 3A), in height direction H of the battery pack housing 10.

Referring now to FIG. 3C, the stiffening ribs 70 has a first contact height Hc1 in contact with the pressure wall 40. The first contact height Hc1 is the height of the stiffening ribs 70 in contact with the pressure wall 40 on the second side 46 of the pressure wall 40.

According to the embodiment, the first contact height Hc1 of the stiffening ribs 70 is less than a total pressure wall height Hp of an upper edge 42 of the pressure wall 40. In other words, a gap is provided between the upper edge 42 of the pressure wall 40 and an upper end of the first contact height Hc1 of the stiffening ribs 70.

Thus, compared to prior arts where the stiffening ribs 70 may reach the top of the upper edge 42 of the pressure wall 40 in an expectation to maximize the effect of mechanical robustness, the stiffening ribs 70 according to the embodiment does not reach the top of the upper edge 42 of the pressure wall 40.

It has been identified and confirmed by FEM results that as a non-intuitive effect caused by the height-reduction of the stiffening ribs 70, the stress induced into the upper edge 32 of the separation wall 30 is reduced. This finding is supported by the FEM results as shown in FIG. 3D, where the tensile stress in the upper edge 32 of the separation wall 30 is reduced. As such, higher forces can be resisted by the battery pack housing 10 and potential cracks prevented.

According to the example embodiment in FIGS 3A to D, the upper edge 42 of the pressure wall 40 may be higher than the upper edge 32 of the separation wall 30. For example, the contact height HC1 may be less than the upper edge 32 of the separation wall 30. In other embodiments (not shown here), the upper edge 42 of the pressure wall 40 may be equal in height compared to the upper edge 32 of the separation wall 30.

The first contact height Hc1 may be less than 90% of the total pressure wall height Hp of the pressure wall 40. In another embodiments, the first contact height Hc1 may be less than 80% of the total pressure wall height Hp or, in another embodiment, the total pressure wall height Hp may be less than 70% of the total pressure wall height Hp. As such, significant tensile reduction can be reached.

Referring to FIG. 3B and 3C, the stiffening ribs 70 have the first contact height Hc1 in contact with the pressure wall 40 at a contact region 48 corresponding to where the pressure wall 40 contacts the separation wall 30. The contact region 48 (e.g. contact area), in other words, refers to the region (e.g. area) at which the pressure wall 40 and the separation wall 30 meet (e.g. where they contact). The contact region 48 may have a vertically extending line-shaped area corresponding to the contacting side wall of the separation wall 30. Thus, the height reduction of the stiffening ribs 70, i.e. where first contact height Hc1 is measured, occurs directly at the location where forces are injected into the separation wall 30. As such, the stresses in the upper edge 32 of the separation wall 30 can be reduced by this configuration.

The height reduction of the stiffening ribs 70 may be formed by a cut-out 71. The cut-out 71 may extend to the first contact height HC1 in a direction opposite to the height direction H at the pressure wall 40. Thus, the cut-out 70 may provide the reduced first contact height HC1. The cut-out 71 may define (e.g., provide) a region (e.g. contact area) in which no material of the stiffening ribs 70 contacts with the pressure wall 50. The cut-out 71 may correspond to the contact region 48.

The cut-out 71 is indicated in in FIG. 3C. Due to the section view A-A, only a half of the cut-out 71 is shown in FIG. 3C. The cut-out 71 extends in a bottom direction, i.e. opposite to the height direction H. As shown in FIG. 3D, the cut-out 71 may cause a splitting of the induced main forces F1, F2 injected into the separation wall 30.

Due to the cut-out 71, the force F exerted by the battery cell stacks 20 onto the pressure wall 40 causes two height-separated first and second main forces F1, F2 induced into the separation wall 30. The main forces F1, F2 are shown in Fig. 3D, where a reduced stress area 36 is formed by the cut-out 71 between the main forces F1, F2. Thereby, tensile stress in the upper edge 32 (e.g., at the critical area 34 as indicated in FIG. 2B) is reduced. As such, crack formation may be prevented and stress resistance increased.

In an embodiment, the cut-out 71 is a removed potion of the stiffening ribs 70. Thus, the cut-out 71 can be retrofitted to battery packs where the stiffening ribs 70 reach the upper edge 42 of the pressure wall 40 by a mere cutting operation performed to remove material of the stiffening ribs 70, e.g., at the contact region 48. This may allow produce the battery pack 100 with already existing manufacturing methods adding merely a cutting or removal operation.

The boundary of the cut-out 71 may be provided with a stiffening protrusion 72. For example, as indicated in Fig. 3C, the stiffening rib 70 includes at least one stiffening protrusion 72 extending in height direction H and in contact with the pressure wall 40, for example two stiffening protrusions 72, on each side of the cut-out 71. The extending in height direction H in contact with the pressure wall 40. Thus, the stiffening protrusions 72 extend in direction toward the upper edge 42, while maintaining a distance thereto, with respect to the bottom portion 14. The stiffening protrusion 72 is located to be laterally displaced, by a displacement δd, from the contact region 48 corresponding to where the pressure wall 40 contacts the separation wall 30. The stiffening protrusion 72 may also define the boundary, or envelope, of the cut-out 71. The stiffening protrusions 72 may maintain a high enough force flow in the separation wall 30 to counteract any outward bending of the upper portions of the pressure wall 40.

Further, when referring to FIG. 3B in to view, a specific topology of the stiffening ribs 70 may be provided to further stabilize the structure. The stiffening ribs 70 form two uncovered portions 74 on the second side 46 of the pressure wall 40. The uncovered portions 74 are separated from each other by a contact portion 73 of the stiffening ribs 74 contacting the second side 46 of the pressure wall 40 at the contact region 48 corresponding to where the pressure wall 40 contacts the separation wall 30. The uncovered portions 74 may be provided by the stiffening ribs 70 forming branches between pressure wall 40 and outer wall 60 that are angled with respect to the separation wall 30. The above topology may further stabilize the structure of the separation wall 30.

In the following, referring to FIGS. 4A - C, yet another embodiment is described which can reduce the tensile stress in the upper edge 32 of the separation wall 30.

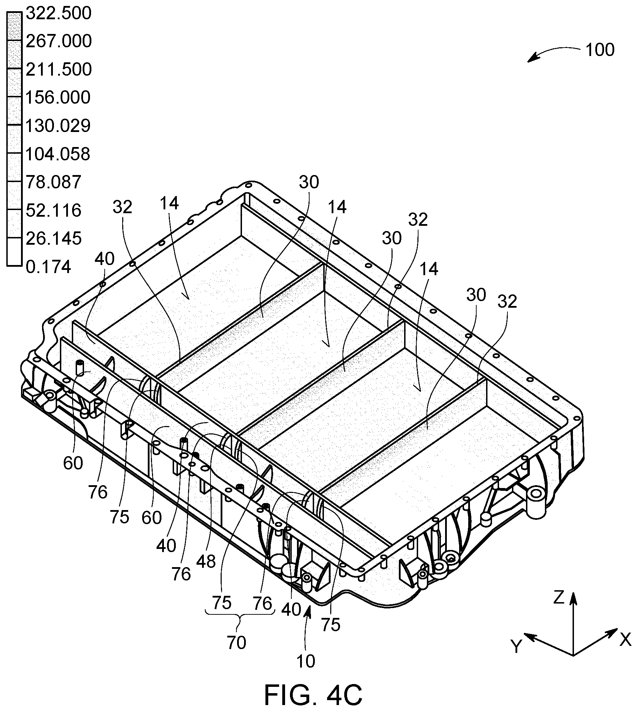

FIG. 4A illustrates a partial perspective view of a battery pack 100 according to an embodiment of the disclosure. FIG. 4B illustrates a side view of a battery pack 100 according to the embodiment of the disclosure. FIG. 4C illustrates a perspective view of a battery pack 100 with stress distribution according to the embodiment of the disclosure. In the following, only the differences with respect to the embodiments of FIGS. 3A -D are described and description of the same features is omitted.

In this embodiment, when referring to FIG. 4A, the reinforcement structure 50 includes the plurality of stiffening ribs 70 between the pressure wall 40 and the outer wall 60 having a different configuration. The stiffening ribs 70 contact the outer wall 60 and the pressure wall 40 and extend from the bottom portion 14 in a height direction H of the battery pack housing 10.

Referring to FIG. 4A and 4B, in this embodiment, the second contact height Hc2 of the stiffening ribs 70 in contact with the outer wall 60 is less than a total pressure wall height Hp of the upper edge 42 of the pressure wall 40. Thus, the second contact height Hc2 of the stiffening ribs 70 in contact with the outer wall 60 is not equal to the total pressure wall height Hp of the upper edge 42 as expected to reduce the stress of the separation wall 30.

According to the present disclosure and as demonstrated the stress analysis of the battery pack in FIG. 4C obtained by FEM analysis, the amount of stress in the upper edge 32 of the separation wall 30 is reduced and the critical areas 34 as indicted in FIG. 2A can be avoided. In this configuration, main forces are transferred away through the stiffening ribs 70 that are height-reduced at the outer wall 60. Thus, by the height relation, stresses occur in the stiffening ribs 70 rather than at the upper edge 32 of the separation wall 30 as shown in FIG. 4C.

For example, the second contact height Hc2 may be less than 90% of the total pressure wall height Hp, less than 80% of the total pressure wall height Hp or less than 70% of the total pressure wall height Hp. As such, an effect of reducing the tensile stress in the upper edge 32 may be achieved.

As shown in more detail in FIG. 4B, the outer wall 60 may have total outer wall height Ho that is less than the total pressure wall height Hp of the upper edge 42 of the pressure wall 40. For example, the total outer wall height Ho of the outer wall 60 may correspond, i.e. may be equal, to the second contact height Hc2. As such, the pressure exerted by the battery cell stack 20 may be guided downward towards the outer wall 60 that is reduced in height.

As shown in FIGS. 4A and 4B, a local height Hc of the stiffening ribs 70 may continuously reduce from the first contact height Hc1 at the pressure wall 40 toward the second contact height Hc2 at the outer wall 60. As such, local high stresses in the stiffening ribs 70 may be avoided.

According to an embodiment, the stiffening ribs 70 may include a descending slope 77 of the stiffening ribs 70 which is smaller in a first region R1 closer to the pressure wall 40 than in a second region R2 that is, relative the first region R1, closer to the outer wall 60. This may be the result of topology optimization of the stiffening ribs 70 avoiding high stresses in the stiffening ribs 70 in the vicinity of the contact region 48.

Referring to FIG. 4A, the stiffening ribs 70 include a first branched rib portion 75 and a second branched rib portion 76 connected and/or contacting with the pressure wall 40 at the contact region 48 corresponding to where the pressure wall 40 contacts the separation wall 30. The first branched rib portion 75 and the second branched rib portion 76 may extend toward the outer wall 60 from the contact region 48 by being branched with a tilted angle α with respect to an extension direction of the separation wall 30. As such, forces may be distributed over the branched portions 75, 76 directly from the contact region 48. As such and as shown in FIG. 4D, imposed tensile stresses in the upper edge 32 of the separation wall 30 are reduced.

As mentioned above, the battery pack housing 10 may be casted. The plurality of stiffening ribs 70 may be integrally formed with the pressure wall 40 and the outer wall 60 to form the battery pack housing 10.

Further, a battery system and vehicle may be provided including the battery pack 100 according to the above embodiments.

In summary, embodiments of the battery pack 100 are described with respect to FIGS. 3A - D and FIGS. 4A -C which reduce the tensile stress occurring in an upper edge 32, e.g. the critical area 34, of the separation wall 30 thereby improving stress resistance of the battery pack 100 and/or to prevent crack formation.

### Reference signs

- 100: battery pack

- 10: battery pack housing
- 12: accommodation space
- 14: bottom portion

- 20: battery cell stack
- 22: battery cell
- 24: end portion

- 30: separation wall
- 32: upper edge
- 34: critical area
- 36: reduced stress area

- 40: pressure wall
- 42: upper edge
- 44: first side
- 46: second side
- 48: contact region

- δd: displacement

- Hp: total pressure wall height

- 50: reinforcement structure

- 60: outer wall
- Ho: total outer wall height

- 70: stiffening rib
- 71: cut-out
- 72: stiffening protrusion
- 73: contact portion
- 74: uncovered portion

- 75: first branched rib portion
- 76: second branched rib portion

- 77: descending slope
- R1: first region (lower slope)
- R2: second region (higher slope)

- α: tilted angle

- F: force
- F1: first main force
- F2: second main force

- Hc1: first contact height
- Hc2: second contact height
- Hc: (local) height

- H: height direction

## Claims

1. A battery pack (100), comprising:
a battery pack housing (10) having a plurality of accommodation spaces (12) with a plurality of battery cell stacks (20) disposed in the respective accommodation spaces (12);
a separation wall (30) separating adjacent battery cell stacks (20) from each other;
a pressure wall (40) comprising a first side (44) in contact with end portions (24) of the battery cell stacks (20) being connected or integrally formed with the separation wall (30);
a reinforcement structure (50) for reinforcing the separation wall (30) provided on a second side (46) of the pressure wall (40) opposite to the first side (44), the reinforcement structure (50) comprising:
an outer wall (60) spaced from the pressure wall (40) and extending parallel to the pressure wall (40), and
a plurality of stiffening ribs (70) between the pressure wall (40) and the outer wall (60), the stiffening ribs (70) contacting the outer wall (60) and the pressure wall (40) from a bottom portion (14) in height direction (H),
wherein the stiffening ribs (70) have a first contact height (Hc1) in contact with the pressure wall (40) and a second contact height (Hc2) in contact with the outer wall (60) which is less than a total pressure wall height (Hp) of an upper edge (42) of the pressure wall (40).

2. The battery pack (100) as claimed in claim 1, wherein the first contact height (Hc1) and a second contact height (Hc2) is less than 90% of the total pressure wall height (Hp).

3. The battery pack (100) as claimed in any one of the preceding claims, wherein the stiffening ribs (70) has the first contact height (Hc1) in contact with the pressure wall (40) at a contact region (48) corresponding to where the pressure wall (40) contacts the separation wall (30).

4. The battery pack (100) as claimed in claim 3, wherein the stiffening ribs (70) has a cut-out (71) extending to the first contact height (Hc1) in a direction opposite to the height direction (H) at the pressure wall (40) in which no material of the stiffening ribs (70) contacts with the pressure wall (50).

5. The battery pack (100) as claimed in claim 4, wherein the cut-out (71) is formed so that a force (F) exerted by the battery cell stacks (20) onto the pressure wall (40) is split into two height-separated main forces (F1, F2) induced into the separation wall (30).

6. The battery pack (100) as claimed in any one of the preceding claims 4 to 5, wherein the cut-out (71) is a removed portion of the stiffening ribs (70).

7. The battery pack (100) as claimed in any one of the preceding claims 4 to 6, wherein the stiffening ribs (70) comprise at least one stiffening protrusion (72) extending in height direction (H) and in contact with the pressure wall (40) with respect to the cut-out (71), and wherein the at least one stiffening protrusion (72) is located laterally displaced from a contact region (48) corresponding to where the pressure wall (40) contacts the separation wall (30).

8. The battery pack (100) as claimed in any one of the preceding claims 1 to 2, wherein the outer wall (60) has a total outer wall height (Ho) that is less than the total pressure wall height (Hp) of the pressure wall (40).

9. The battery pack (100) as claimed in claim 8, wherein the total outer wall height (Ho) of the outer wall (60) corresponds to the second contact height (Hc2).

10. The battery pack (100) as claimed in any one of the preceding claims 8 to 9, wherein a local height (Hc) of the stiffening ribs (70) continuously reduces from the first contact height (Hc1) toward the second contact height (Hc2) of the outer wall (60).

11. The battery pack (100) as claimed in claim 10, wherein a descending slope (77) of the stiffening ribs (70) is smaller in a first region (R1) closer to the pressure wall (40) than in a second region (R2) closer to the outer wall (60).

12. The battery pack (100) as claimed in any one of the claims 8 to 11, wherein the stiffening ribs (70) comprise a first branched rib portion (75) and a second branched rib portion (76) connected with the pressure wall (40) at the contact region (48) and extend toward the outer wall (60) from the contact region (48) by being branched with a tilted angle (α) with respect to an extension direction of the separation wall (30).

13. The battery pack (100) as claimed in any one of the claims 1 to 12, wherein in the battery pack housing (10) is casted.

14. The battery pack (100) as claimed in any one of the claims 1 to 13, wherein plurality of stiffening ribs (70) is integrally formed with the pressure wall (40) and the outer wall (60).

15. A battery system, comprising a battery pack (100) according to any one of the preceding claims 1 to 14.
